# EUROPEAN PATENT SPECIFICATION

(11) **EP 1 277 709 B1**
(45) Date of publication and mention of the grant of the patent: **04.07.2012**
(21) Application number: 02405375.3
(22) Date of filing: 07.05.2002
(51) Int. Cl.: C04B 7/00, C04B 7/44

(54) **Method to produce cement clinker using coke with a high content of sulfur**
Verfahren zur Herstellung von Zementklinker unter Verwendung von schwefelreichem Koks
Procédé de fabrication de clinker de ciment en utilisant du coke à haute teneur en soufre

(30) Priority: 13.07.2001 MX PA01007229
(43) Date of publication of application: 22.01.2003
(73) Proprietor: Cemex Research Group AG, 2555 Brügg (CH)
(72) Inventor: Ramirez-Tobias, Homero, 64850 Monterrey, N.L. (MX); Làzaro-Franco,Alberto, Garza Garcia, N.L. (MX); Martinez-Burckhardt, Juan Carlos, 67174 Guadalupe, N.L. (MX); Lòpez-Gonzàlez, Walter, 64347 Monterrey, N.L. (MX)
(74) Representative: Novagraaf Technologies

(56) References cited:
- US-A- 5 698 027
- US-B1- 6 183 244
- DATABASE WPI Week 200013 Derwent Publications Ltd., London, GB; AN 2000-137713 XP002214081 & CN 1 235 129 A (UNIV HUANAN SCI & ENG)

## Description

### FIELD OF THE INVENTION

This invention relates to a method to produce a cement clinker and, specifically, a method to produce cement clinker using coke with a high-sulfur content as fuel, in order to minimize the problems related to the use of said fuel.

### BACKGROUND OF THE INVENTION

The processes and plants used to manufacture cement clinker are well known. Generally, the manufacturing process consists in preparing a raw meal (raw mixture) comprising a mixture of materials such as limestone (CaCO₃), clayey (argillaceous) materials (e.g., SiO₂, Al₂O₃) and iron minerals (e.g., Fe₂O₃). Said raw meal preparation includes the drying, pulverizing and supplying stages of said materials in adequate amounts to achieve with the clinker the required composition to obtain a product with the final quality desired. Once the raw meal is prepared, pulverized and homogenized with the required composition, the next stages in the process are: feeding said raw meal to a kiln passing through a pre-heater; calcining said preheated raw meal to transform the CaCO₃ into CaO and CO₂; feeding the calcined meal to a sintering kiln; sintering (also known as clinkering) the calcined meal to form the clinker compounds such as tricalcium silicate (alite), dicalcium silicate (belite), tricalcium aluminate and tetracalcium aluminoferrite.

Typically, in order to carry out this drying, calcining and sintering process (clinkering), high amounts of energy are required to maintain the high temperatures in the process, the required temperature in the sintering stage being of about 1450° C, which to achieve it and keep it requires the consumption of large amounts of fuel.

Currently, the availability of fuels with a high-sulfur content and their lower cost represent an opportunity for the cement industry, however, their use requires special operation handling and new methods to facilitate their use without detriment of the continuity of the kiln operation.

One of the fuels with a high-sulfur content available is petroleum coke, which due to its nature has a high sulfur content of more than 4.5% of elemental sulfur. The sulfur included in the fuels plays an important roll when working with the combustion process. On the one hand, this type of fuel generates the heat necessary to maintain the process temperature and, on the other hand, it produces SO₂ which added to the SO₂ coming from the sulfur content in the raw materials used to form the raw meal, represents an important amount which can produce blockages in the preheater if no stages or special measures are taken or an adequate method is used for processing.

As is known, the SO₂ contained both in the combustion gasses as well as in the raw meals come in direct contact with the CaO (limestone), forming sulfated calcium compounds (calcium sulfites and sulfates CaSO₃ and CaSO₄). When subjected to the high temperatures for forming the clinker compounds, which are higher than the decomposition temperature, the sulfated compounds decompose again in SO₂ and CaO, the latter reacting and forming new clinker compounds and the SO₂ returns in the combustion gasses towards the kiln inlet to again react with the CaO, in such a way that it forms a cycle, which when reaching high concentrations of SO₂ and having no outlet precipitates to the coldest areas of the preheater forming accumulations and blockages, such as in the preheating stages, blocking the fume chamber, etc., causing operation disturbances by reducing its efficiency and, in more serious cases, stops the operation, for example, when it forms rings in the clinkering kiln.

In the art, there are a number of efforts tending to the design of the installations, equipment and/or processes for the use of solid fuels with a high sulfur content, for the purpose of solving the problems related with the formation and accumulation of SO₂. However, the majority of the processes and/or plants to manufacture cement clinker using solid fuel with a high sulfur content present certain disadvantages with respect to the complexity of the processes and equipment, as well as high costs. For instance, the US Patent No. 4,465,460, entitled "Production of cement clinker" issued to Paul Cosar on August 14, 1984, relates to the use of solid fuels with a high sulfur content in the production of cement clinker in rotating kilns. The solid fuel is gasified and the gasified fuel is placed in contact with a fraction of the raw material used for the production of cement clinker to dessulphurize the gasified fuel and the gasified desulphurized fuel is discharged towards a calcining stage and/or to the rotating kiln to provide calories to same. In addition, it is mentioned that the factors to increase the desulphurization reaction are the gas temperature in the range of approximately 800°C to 950°C and the fine granulation of the raw material, preferably to average the grain size approximately 100 microns. This patent is related with complex facilities and processes to produce cement clinker, which includes additional equipment to reduce the sulfur content or to dessulphurize the combustion gases. The combustion gases are placed in contact with a fraction of the raw material to, thus, dessulphurize said combustion gases by the partial reaction of the SO₂ with the CaO. However, the control of operation parameters is not mentioned to avoid the decomposition of the sulfated compounds formed in prior stages, before the calcinated raw material is sintered. In other words, said patent specifically describes a process and installation to reduce to a minimum the sulfated compounds contained in combustion gases. Thus, there is no suggestion as to how to effectively avoid the problems related to the accumulation of sulfated compounds in the system.

US Patent Nos. 4,662,945 and 4,715,811, both entitled "Process and apparatus to manufacture low sulfur cement clinker issued to Thomas R. Lawall on May 5,1987 and December 29, 1987, respectively, describe a process and apparatus to manufacture low sulfur cement clinker from cement raw meal containing sulfur or with fuel containing high levels of sulfur or a combination thereof. The apparatus includes a preheater, calcining kiln, clinkering kiln and clinker cooler. A separate source of fuel Is added at the end of the clinkering kiln to maintain reducing conditions end temperatures for decomposing the sulfur compounds. The fuel added at the end of the clinkering kiln is carbon or coke fuel with low volatility. This patent relates to the production of a cement clinker with low sulfur content by means of the separation of the sulfur compounds by reductive conditions. To obtain said clinkers with a low-sulfur content the use of equipment and stages specially designed to operate under said reduce conditions are required. The obtained product is a clinker with a low alkaline sulfur content. Not with standing, said patent does not make reference neither to the sintering temperature reduction nor to the optimization or pretreatment of the raw material to avoid the accumulation of sulfated compounds in the system, but focuses in eliminating the sulfated compounds during the calcining stage.

The US Patent No.6,142,771, entitled *Control of cement clinker production using high sulfur fuel in a Lelep-Lepol travelling grate rotary kiln by analysis of sulfur in the end product* issued to Joseph Doumet on November 7, 2000, describes a method and apparatus of producing cement clinker using a high-sulfur content fuel. The high-sulfur content fuel is fed to e burner disposed in the clinkering kiln and mixed with the raw meal before entering the clinkering kiln. The object of this invention is to control the oxygen and carbon monoxide concentration, as well as the sulfur content In the cement clinker to control the system. To use fuels with high sulfur content and to avoid problems related to same, the object of this invention is to control the speed of the gas exhauster placed on the kiln outlet and the fuel flow which is to be used in the process, to thus allow the control the oxygen amount in the chemical reaction zone/ sintering of the clinkering kiln. This type of apparatus is not efficient to control the amount of SO₃, in the resulting cement clinker and its delay answer periods to correct the operating conditions.

Another effort in the art to use petroleum coke is disclosed in the China patent number 1,180,874 issued to Wang Xinchang, et al., on May 9,1999, entitled "Method to produce high quality cement using petroleum coke with a high sulfur content". The method includes the stages of spheroidizing the petroleum coke mixture with high sulfur content, limestone, clay, iron dust, carbon and fluorite; calcining to obtain the clinker; mixing with gypsum, and pulverizing. The sulfur content of said coke could be from 2 to 8%, which can replace the carbon by 20 - 100%. The cement obtained up to more than 425R characteristics and high resistance. The method is based on mixing the raw materials with petroleum coke to later be granulated and burned in a vertical kiln. However, this creates problems with respect to the appropriate dosage of the mixture to carry out the decarbonation (calcination) of the calcinated mixture, which results In an inefficient reaction.

Further efforts are disclosed in, for example, US Patent Nos. 5,707,444 (Soren Hundebol), related to the amount of fuel used In the kiln, adjusting same in accordance with the calcination of the sulfur evaporation, Hundebol's patent focusing on the adjustment related with specifically the temperature control of the clinkering kiln; 8,050,813 (Joseph Doumet) which describes the control of cement clinker production by means of the operating parameters, such as the control of the amount of oxygen at the kiln inlet via the measurement of the SO₃ content in the clinker at the cooler exit, the inconvenience is that the information on the SO₃ obtained in the clinker to control the amount of oxygen led is displaced and, thus, can not provide an adequate control on line for the production of a clinker, because the operating conditions do not correspond to those during the formation of the clinker being analyzed; and 8,183,244 (Joseph Doumet) related with the production of clinker using fuel with high sulfur content In wet rotating kiln.

The US Patent No. 5,698,027 entitled "Method and Plant for manufacturing mineralized Portland cement clinker" issued to Hans E. Borgholm, et al, on December 18, 1997, describes the use of a mineralizer which has no detrimental effect on the flow properties of the raw meal, which can be added in any place during the process. Said mineralizer can be, for example, a sulfur containing component arising as a by-product in the desulphurization of the fuel gas. The mineralizer can be directly feed to the raw mixture, to the calciner or through hot air from the cooler towards the calciner. It does not mention the kiln temperature control or to its stabilization, to avoid sulfur evaporation provided as a by-product of desulphurization of the fuel gas, i.e., the decomposition of the sulfated compounds, which would generate problems in the system, such as the accumulation, blockage and the formation of rings due to said sulfur compounds.

The CN 1 235 129 A (Univ. Huanan SCI & Eng) discloses a process for calcining cement clinker with the raw material containing W element features that the raw material containing W element is used as mineralizing agent for calcining cement clinker and isdirectly added to the raw materials of cement before calcining, the saturation coefficient KH of lime stone, silicic acid ratio SM and aluminium/oxygen ratio IM are controlled to be 0.88-0.96, 1.8-2.6 and 1.0-1.6 respectively, the W content in said raw material is 0.005-50.000 wt.%, the mineralizing agent containing fluorine is not or less added, and the W content in cement clinker is 0.0005-0.100 wt.%.

It has also been considered to improve the burning ability of the raw materials or raw meal for the purpose of reducing the sintering temperature (clinkering) end, thus, to avoid the decomposition temperature of the sulfated compounds to be achieved Examples of methods and apparatus to burn granulated or pulverized products to manufacture cement clinker are describe, for example in the US Patent No. 6,000,145 issued on December 14, 1999; US Patent No. 4.495,398 issued on January 29, 1985; US Patent No. 4,581,842 issued on December 31, 1985; and US Patent No. 4,557,883 issued to Nielsen Peter B., on December 10, 1985. However, all the above-mentioned patents are related to the preparation of raw materials as a conventional phase in the clinker manufacturing process, substituting the rotating kiln with stationery reactors, without taking into consideration the decomposition of the sulfur compounds. in a relevant form, the US Patent No. 5,800,610 issued to Ebbe S. Jons on September 1, 1998, entitled "Method for manufacturing cement clinker", describes to initially subject the raw meal to a preparatory processing, e.g., by comminution, homogenization and/or drying. Nevertheless, this method is carried out on fixed burning reactor and it is not mentioned the form in which said preparatory processing is carried out or the operating conditions.

According to the above, there is no document in the prior art that describes or suggests the reduction of the clinkering or sintering temperature by means of a parameters control of the raw mixture, in the operation of the kiln and the SO₃ level at the kiln inlet. Thus, there is the need for a method for producing cement clinker which will allow a more economic and efficient use of fuels with a high sulfur content, such as petroleum coke, but that at the same reduces to the minimum the problems associated with blocking and incrustations due to the high concentration of SO₂ and/or SO₃ in the system.

Therefore, the object of the present invention is to provide a method to produce cement clinker with a simple operation and, however, that is highly efficient to consume 100% of the petroleum coke.

It is a further object of the present invention is to produce a high quality cement clinker, which does not require the addition of additives to improve its final physical properties.

Yet, another object of the present invention is to provide a method to produce cement clinker that can be used in any conventional process and facility.

### SUMMARY OF THE INVENTION

The present invention related to a method for producing cement clinker comprising the features indicated in claim 1.

### BRIEF DESCRIPTION OF THE DRAWINGS

The aspects that are considered characteristics of the present invention will be specifically set forth in the attached claims. However, the invention itself, both because of its organization as well as for its operating method, together with other objects and advantages of same, will be better understood with the following description of certain embodiments, when read in respect to the drawings attached herein, wherein:
Figure 1 is a schematic diagram illustrating a process to produce cement clinker according to prior art.
Figure 2 is a schematic diagram illustrating the general process to produce cement clinker in accordance with the present invention.
Figure 3 is a schematic diagram illustrating the treatment process of the raw mixture in accordance with the present invention, as shown on Figure 1.
Figure 4 is a schematic diagram illustrating the calcining process of the raw mixture in accordance with the present invention, as shown on Figure 1.
Figures 5 and 6 are graphics showing the burning ability of the gray raw meal, as a function of the temperature and the percentage of free limestone as a function of the temperature, respectively.

### DETAILED DESCRIPTION OF THE INVENTION

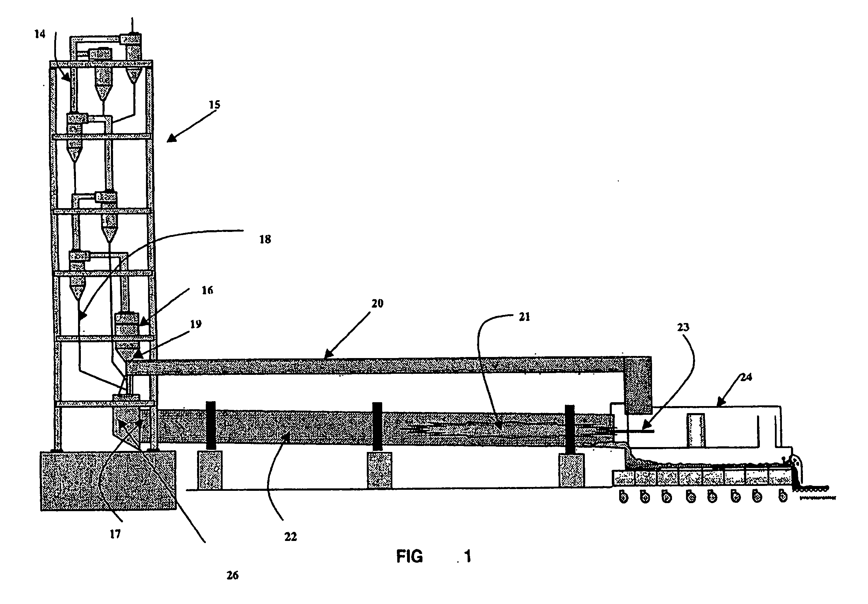

Referring to the drawings, Figure 1 shows a schematic diagram of the process to produce cement clinker based on the prior art. The process includes the stages of: feeding the raw mixture through a feeding line 14, preheating the raw mixture through a preheating system 15, precalcining the preheated raw mixture by means of a precalciner 16, sintering the calcinated raw mixture in a rotating kiln 22 to, thus, produce the cement clinker and cooling the cement clinker by means of a cement clinker cooler 24.

In the known processes for producing cement clinker using, for example, the process shown on Figure 1, the raw mixture fed to the rotating kiln 22 is preheated and partially decarbonated in a preheating system 15 and in a precalciner 16 using the heat of the combustion gases drawn from the rotating kiln 22 and from the precalciner 16. As the combustion gases and the raw materials are mixed, the limestone (CaO) in the raw mixture and the sulfur dioxide (SO₂) in the combustion gases react to form calcium sulfite (Ca SO₃). The calcium sulfite is formed in the preheater 15. The calcium sulfite, in turn, reacts with the oxygen inside the preheating system 15 to form calcium sulfate (Ca SO₄), if there is sufficient oxygen. If there is not sufficient oxygen in the atmosphere at the kiln inlet 22 to create a vigorously oxidizing atmosphere, the calcium sulfate may decompose into limestone (CaO) and sulfur dioxide (SO₂) and generate accumulations in the kiln outlet 22. If there is an oxygen deficiency in the rotating kiln 22, the calcium sulfate may decompose at temperatures lower than 1500° C. This decomposition also leads to an increase in the sulfur dioxide concentration in the gas inside the kiln 22, which leads to deposits of calcium salts on the walls of the preheating system 15. The deposits of calcium salts increase when the fuel is a solid fuel with a high sulfur content (i.e., over 4.5%), such as petroleum coke, due to the increased concentration of sulfur dioxide in the kiln gas 22. The increased sulfur circulation in the gases causes an increase in the amount of calcium sulfite. This can result in deposits to a sufficient level to block the kiln inlet 22, the preheater 15, the preheater cyclones and the lines connecting the cyclones, thus stopping production.

To ensure the efficient use of the petroleum coke with a high sulfur content (over 4.5% by weight), the applicants of the present invention have surprisingly found that based on the treatment of the raw mixture to optimize its physical-chemical characteristics, combined with a control of the process parameters and, optionally, the use of mineralizers, one can reduce the clinkering temperature and, as a result, the SO₃ concentration in the calcinated material fed to the rotating kiln is reduced, increasing with this the calcium sulfate content in the clinker. By applying these variables, one can use conventional processes and facilities already existing avoiding, thus, blockage problems in the preheating stages, blockage in the fume chamber and the formation of rings in the sintering kiln, caused by high concentrations of sulfur in the combustion gases.

### Treatment of Raw Mixture

For the treatment of the raw mixture, also called optimization, the applicants consider the evaluation and improvement of the burning ability of the raw mixture by means of adjustment to the control modules, the adjustment to the fineness of the raw mixture measured in meshes n.200 and n.50 and the optional use of mineralizers.

The raw mixture is generally composed of limestone (Ca CO₃), clays (SiO₂, Al₂O₃) and iron mineral (Fe₂O₃), in adequate ratios to achieve the quality desired for the cement clinker, i.e., in an adequate amount of the compounds mainly required to form the clinker, for example, tricalcium silicate. Control of the ratios of the raw materials is carried out by means of the relationship of the compounds (SiO₂, Al₂O₃, CaO, Fe₂O₃) called control modules. In general said control modules are: the Limestone Saturation Factor (LSF), Silica Module (SM) and Alumina Module (AM).

The control modules are calculated in accordance with the following equations:
a) Limestone Saturation Factor

   LSF = CaO/ (2.8 SiO₂+1.18 Al₂O₃+0.65 Fe₂O₃).
b) Silica module

   SM = SiO₂/ (Al₂O₃ + Fe₂O₃).
c) Alumina module

   MA = Al₂O₃ / Fe₂O₃

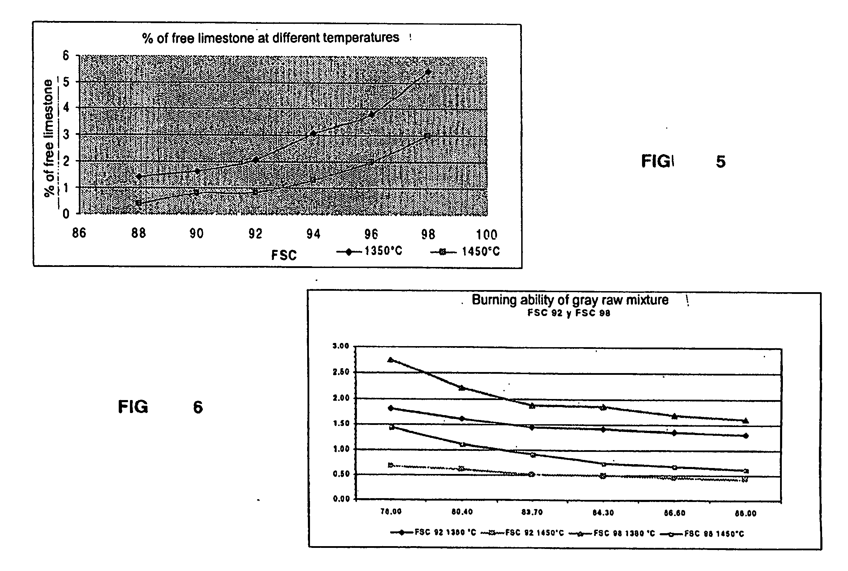

As is known, high values in the control modules, for example, in the Limestone Saturation Factor (LSF or FSC), the Silica Module (SM) and the Alumina Module (SM), result in raw materials difficult to transform into clinker (low burning ability), see Table 2 and Figure 5 which shows the burning ability of the raw mixture as a function of the LSF. In addition, we know that the fineness of the raw mixture (particle size) also affects the burning ability thereof, while a finer raw mixture (see Table 1) the burning ability improves. On Figure 6, we can observe the effect of the fineness of the mixture with respect to its burning ability.

**TABLE 1**

| % OF FREE LIMESTONE | | |
|---|---|---|
| LSF | T = 1350°C | T = 1450° C |
| 88 | 1.415 | 0.408 |
| 90 | 1.63 | 0.815 |
| 92 | 2.068 | 0.827 |
| 94 | 3.0385 | 1.304 |
| 96 | 3.78 | 2.00 |
| 98 | 5.44 | 2.979 |

**TABLE 2**

| | | LSF 92 | | | LSF 98 | |
|---|---|---|---|---|---|---|
| Mesh | Sample | Mesh | 1380°C | 1450°C | 1380°C | 1450°C |
| 76.75 | 1 | 76.75 | 1.95 | 0.74 | | |
| 78.75 | 2 | 78.00 | 1.82 | 0.67 | 2.75 | 1.44 |
| 80.74 | 3 | 80.40 | 1.62 | 0.62 | 2.21 | 1.11 |
| 82.66 | 4 | 83.70 | 1.45 | 0.51 | 1.88 | 0.92 |
| 85.17 | 5 | 84.30 | 1.42 | 0.49 | 1.86 | 0.74 |
| 87.00 | 6 | 86.60 | 1.35 | 0.45 | 1.69 | 0.68 |
| 89.00 | 7 | 88.00 | 1.31 | 0.41 | 1.61 | 0.61 |

By means of the treatment process or optimization of the physical-chemical characteristics and fineness of the raw mixture, it is improves its burning ability, reducing, thus, the clinkering temperature such that as a surprising result the calcium sulfate decomposition (CaSO4) is reduced, the calcium sulfate exiting the kiln 22 as part of the clinker composition.

As can be observed from the graphics of Figures 5 and 6, the treatment to optimize the raw mixture allows a reduction in the clinkering temperature of more than 100°C.

### Use of Mineralizers

It is known that the addition of small amounts of some compounds which normally do not constitute the raw mixture can alter the speed at which the clinkering reaction takes place, compounds of this type with an acceleration effect in the reaction speed and a reduction in the energy required for the clinkering reaction are called mineralizers. The method to produce clinker of the present invention that reduces the clinkering temperature using coke with a high-sulfur content optionally uses CaF₂ (fluorite) as a mineralizer.

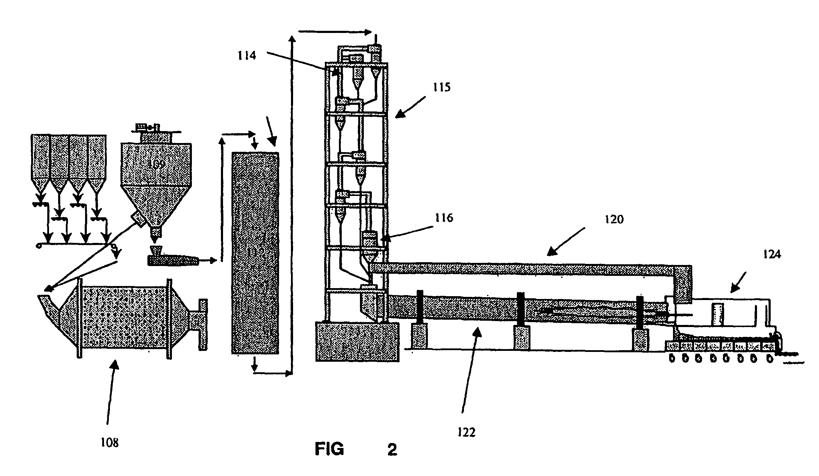

In the method of the present invention, the use of CaF₂ (fluorite) as a mineralizer helps to strengthen the clinkering temperature reduction control achieved by means of the optimization treatment of the raw mixture. The addition of the mineralizer to the raw mixture allows for the stabilization of the kiln operation and, in addition, helps to reach the desired free calcium values (CaO without reacting), and makes it possible to maintain a temperature control in the sintering zone, avoiding thus marked fluctuations and, therefore, maintaining the decomposition of the calcium sulfites and sulfates in the sulfur at low levels (less than 50%). The mineralizer (CaF₂) is stored in the hopper 103 (see Figure 2) and is dosed through the feeder 107 to the raw mixture mill 108, in a ratio that varies from 0.2 to 0.5% by weight of the total composition.

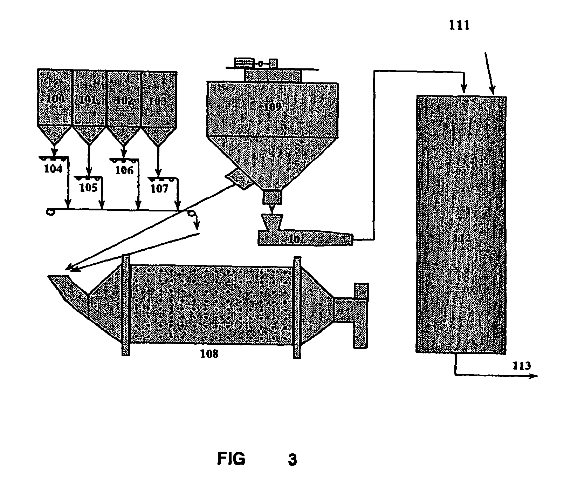

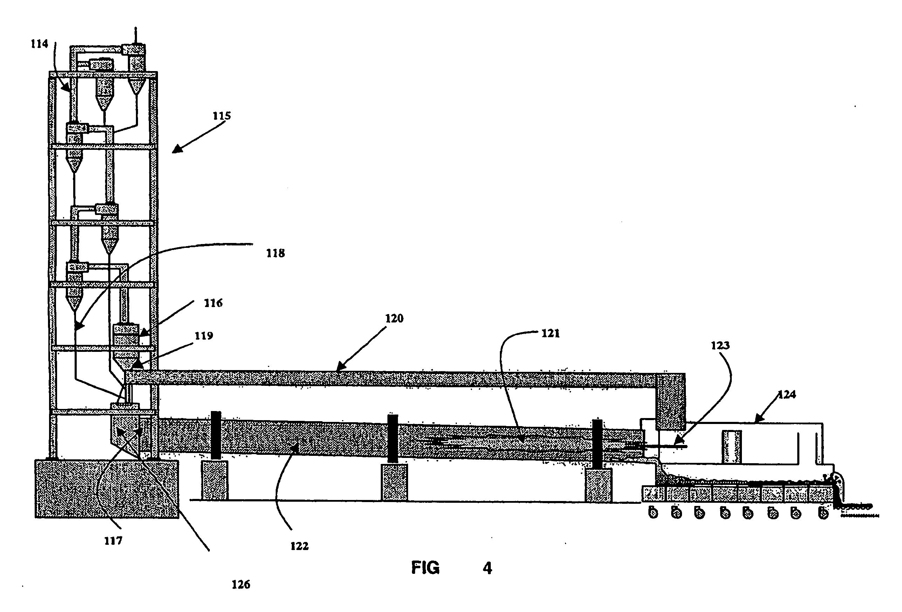

Referring to Figures 2 through 4, the method for producing cement clinker in accordance with the present invention is schematically showed. After having been treated the raw mixture to optimize its physical-chemical characteristics as previously set forth, that is, the raw mixture is prepared by means of a milling system illustrated in Figure 2, the materials stored in the hoppers 100, 101 and 102 are dosed based on the control modules, such as the Limestone Saturation Factor, the Silica Module and the Alumina Module previously mentioned, to obtain the optimum levels of the raw mixture treated.

After having determined the optimum dosage levels of the materials, in accordance with the control modules, these materials are fed to the mill 108, through the raw material feeders 104, 105, 106 and 107, where they are pulverized forming, thus, the raw mixture. After the materials are pulverized, the raw mixture is led towards a separator 109 where it is classified to obtain the desired fineness, i.e., a determined particle size. The raw mixture optimized by said control modules and the fineness adjustment is transported by means of a conveyor 100 to the homogenizer silo 112 where it is mixed for the purpose of reducing the fluctuation in the values of the control modules. The homogenizing process is basic to obtain a product with a constant quality, which will result in a continuous and efficient operation of the calcining system.

The optimized raw mixture 113 coming from the homogenizer silo 112 is fed to the rotating clinkering kiln 123 passing through the preheater 115 through the feeding line 114 and the precalciner 123 to subject the optimized raw mixture 113 to the heating, drying and decarbonating operations, by means of close contact with the combustion gases of the fuel fed to the burner of the precalciner 119 and/or to the main burner 123 of the rotating clinkering kiln 122.

The calcinated and optimized raw mixture 113 is fed to the rotating kiln 122 through the inlet 117, as the kiln rotates the calcinated raw mixture 113 flows inside the kiln towards the outlet 125 thereof. Inside the rotating kiln 122 the chemical reactions to sinter the raw mixture 113 take place, by means of the gases generated by the fuel combustion fed to the main burner 123 of the kiln 122, the sintered mixture normally called clinker exiting the kiln 122 passes through the clinker cooler 124 where it is cooled.

In accordance with the method of the invention herein, the petroleum coke is fed to the rotating kiln 122 through the main burner 123 and/or the precalciner 119 in a conventional manner, as is known by the skill person in the art. As is also known, petroleum coke has a high concentration of sulfur which, under normal operating conditions of the kiln, without taking into consideration that this type of fuel requires adequate stages for its use, it produces accumulations and blockages, such as blockages during the preheating stages, blockage of the fume chamber, etc., which cause operating disturbances, reducing its efficiency and in more serious cases do not allow the operation to continue, for example, when it form rings in the clinkering kiln.

As is known, the sulfated compounds, such as CaSO₃ generated by the limestone reaction (CaO) of the raw mixture and the sulfur dioxide (SO₂) contained in the combustion gases of the fuel with a high sulfur content, when subjected to high formation temperatures of the clinker compounds which are higher than their decomposition temperature, again decompose in SO₂ and CaO, the latter reacts forming new clinker compounds and the SO₂ returns with the combustion gases towards the kiln inlet to react again with the CaO, in such a way that it forms a cycle, which when it reaches high concentrations of SO₂ and without a possible exit, precipitates to cooler areas. The applicants of the present invention have surprisingly discovered that the use of an optimized raw mixture with the control of certain process parameters, such as the residence time and control of SO₃ at the precalciner outlet, allow for a clinkering temperature reduction which results in a lower evaporation of the SO₃, as well as a reduction in the SO₃ concentration in the calcinated material fed to the rotating kiln, increasing the calcium sulfate content in the clinker. In other words, it is basic to handle the temperature reduction at the clinkering stage as an operating measure to achieve the use of coke with a high sulfur content avoiding to a maximum the problems related to same.

As previously mentioned, the possibility of reducing the clinkering temperature is achieved by controlling the burning ability of the raw mixture prepared during the milling stage in the mill 108, by means of a combination of the variables related to the control and adjustment of fineness modules (particle size) of the raw mixture.

The decomposition process of the sulfur compounds (sulfur evaporation process) formed in the preheater due to the CaO reactions with the raw mixture and the SO₂ in the system shall be verified inside the kiln when exposed to temperatures ranging from 1200 to 1500° C. To minimize the decomposition of these compounds, it is important to monitor and control certain specific operating parameters, such as exposition time or the residence time of the calcinated raw mixture, the clinkering temperature, the oxidizing conditions at the kiln inlet, in addition to the SO₃ content in the calcinated material.

In accordance with the present invention, the operating conditions of the clinkering kiln must be selected such that in combination with the optimized raw materials, the optional use of the mineralizer and the SO₃ control at the kiln inlet, can be able to efficiently control the use of coke with a high sulfur content, that is to say with more the 4.5% by weight of sulfur. The parameters that should be controlled are the temperature in the fume chamber, which should be under 1150°C, the oxygen supply at the kiln inlet 117 must be sufficient to maintain a highly oxidizing atmosphere (over 4.5%), the percentage of SO₃ in the calcinated mixture supplied at the kiln inlet 117 and the percentage of SO₃ in the clinker produced must have a maximum value of 5% by weight and more than 1.8% by weight, respectively.

Once it has reached the maximum use percentage of the high sulfur content coke and achieved stabilization in the kiln operation (without stops or disturbances due to blockages of rich sulfur material deposited in the fume chamber 126 and the preheater 115), it begins (if required) the stage for the use of mineralizers in the process. The use of a mineralizer as an optional component of the optimized raw mixture will allow to stabilize the kiln operation, facilitate the free limestone control and eliminate the need to change the amounts of fuel used, with this stabilizing the temperature in the clinkering zone (sintering), wherein the stability of the clinkering zone allow to maintain stable the SO₃ values in the clinker and, thus, to drain the sulfur from the system.

An important factor to achieve the clinkering temperature reduction and to minimize the problems related to the sulfated compounds produced by the combustion gases generated due to burning fuel with a high sulfur content to obtain a clinker with adequate properties, resides in the measurement of the sulfur content which is drained from the system and which is a part of the clinker composition measured as SO₃. The control parameter for the SO₃ in the clinker is established as a function of how much sulfur is fed to the system and as a percentage of sulfur evaporation (decomposition of the sulfated compounds) in the kiln 122. In a embodiment of the present invention, this control parameter is based between the value of the analysis and the specification, which when there is a variance it shall be necessary to make adjustments which can be made to the fuel considering the value of the free limestone in the clinker, the raw mixture fed to the kiln and the amount of oxygen at the kiln inlet by controlling the speed of the main kiln fan.

The method for producing cement clinker of the present invention, also considers as another important factor for the control of the process previously mentioned, the measurement of the SO₃ in the calcinated material coming from the previous cyclone to the kiln inlet 117, the increase in the SO₃ content in this calcinated material indicates that the sulfur cycle (inside the system) is concentrating. Thus, the clinker produced in the rotating clinkering kiln utilizing the method of the present invention using coke with a high sulfur content allows for a reduction and even eliminates the addition of gypsum (CaSO₄.2H₂O) in the cement, as regulator of the setting times.

We provide the following examples only as illustrative purposes and in no way are they intended to limit the scope of the present invention.

### EXAMPLES

The following example schematizes the results of the optimization of the raw mixture process in an industrial application of the method proposed.

The raw mixture was prepared in accordance with the control parameters previously mentioned and a reference raw mixture, in which no control was made.

| Parameter | Raw without Optimization | Optimized Raw |
|---|---|---|
| LSF | 0.98 | 0.95 |
| SM | 2.9 | 2.9 |
| AM | 2.9 | 2.9 |
| M200 in % | 78 | 82 |
| Free limestone at 1450°C | 2.07 | 1.03 |
| Free limestone at 1350°C | 3.2 | 1.89 |
| % of SO3 in the calcinated material at the kiln inlet | 4.9 | 2.8 |

As noted in the foregoing table, once the raw mixture has been optimized the result is to lower approximately 100° C the clinkering temperature, this is noted in that at 1450° C the free limestone obtained in the mixture without optimizing gives a value of 2.07 and the already optimized mixture but burned at 1350° C results in a free limestone of 1.89, that is to say practically the same as the mixture without optimizing burned at 100° C over 1350° C, also adjusting the operating parameters of the rotating kiln. Due to this reason, the temperature reduction brings with it a lower decomposition of the sulfated compounds inside the rotating kiln and thus a reduction in the SO₃ content of the calcinated materials at the kiln inlet and an increase of the calcium sulfate that exits as a component of the clinker.

## Claims

1. A method for producing cement clinker comprising the stages of:
- feeding the raw mixture;
- preheating the raw mixture;
- calcining the preheated raw mixture;
- clinkering of the calcinated raw mixture to produce cement clinker and controlling the residence time of the calcinated mixture, the clinkering temperature and the oxidizing conditions at the kiln inlet (117) during the clinkering stage; and
- cooling the cement clinker
wherein the method further includes the stages of:
- preparing the raw mixture before the feeding stage based on the Limestone Saturation Factor (LSF), the Silica Module (SM) and the Alumina Module (AM) and the fineness adjustment of the raw mixture, being the LSF up to 1, the SM with values between 2 and 3.5, the AM between 0 and 3, and the fineness adjustment in a mesh No. 200.

2. The method according to claim 1. wherein the clinkering temperature is 1350 °C.

3. The method according to claim 1, wherein said fuel used to preheat, decarbonate and sinter the raw mixture is petroleum coke with a sulfur content of more than 4.5% by weight.

4. The method according to claim 1, wherein it comprises an additional stage to add the mineralizer at the raw mixture preparation stage to strengthen the control of the clinkering temperature reduction.

5. The method according to claim 4, wherein said mineralizer is CaF2, which is added in a ratio that varies from 0.2 to 0.5% by weight of the total composition of the raw mixture.

6. The method according to claim 1, wherein it further includes a stage of controlling the concentration of SO3 in the calcinated mixture that is fed to the clinkering kiln.

7. The method according to claim 6, wherein the concentration of SO₃ in the calcinated mixture that is fed to the clinkering kiln has a maximum value of 5% by weight.

8. The method according to one of the preceding claims, wherein the concentration of SO₃ in clinker produced has a value of more than 1,8% by weight.

9. The method according to one of the preceding claims, wherein the temperature in the fume chamber (126) is under 1150 °C.

10. The method according to one of the preceding claims, wherein the oxygen supply at the kiln inlet (117) is over 4,5% to maintain a highly oxydizing atmosphere.

## Patentansprüche

1. Verfahren zur Herstellung von Zementklinker, das folgende Schritte umfasst :
- Zuführen der Rohmischung;
- Vorwärmen der Rohmischung;
- Kalzinieren der vorgewärmten Rohmischung;
- Sintern der kalzinierten Rohmischung zur Fertigung von Zementklinker und Steuerung der Verweilzeit der kalzinierten Mischung, der Sintertemperatur und der Oxidationsbedingungen am Ofeneintritt (117) während des Sinterschritts; und
- Kühlen der Zementklinker,
**dadurch gekennzeichnet, dass** das Verfahren ferner folgende Schritte umfasst:
- Zubereitung der Rohmischung vor dem Zufuhrschritt aufgrund des Kalksättigungsfaktors, der Kieselsäureverhältniszahl 1 und der Aluminiumoxidverhältniszahl und der Einstellung der Feinheit der Rohmischung mit einem Kalksättigungsfaktor bis 1, Kieselsäureverhältniszahl-Werten zwischen 2 und 3,5, Aluminiumoxidverhältniszah-Werten zwischen 0 und 3 und einer Einstellung der Feinheit in einem Sieb Nr. 200.

2. Das Verfahren nach Anspruch 1, **dadurch gekennzeichnet, dass** die Sintertemperatur 1350 °C beträgt.

3. Das Verfahren nach Anspruch 1, **dadurch gekennzeichnet, dass** zum Vorwärmen, der Dekarbonisierung und dem Sintern der Rohmischung Petroleumkoks mit einem Schwefelgehalt von mehr als 4,5 Gewichtsprozenten als Brennstoff verwendet wird.

4. Das Verfahren nach Anspruch 1, **dadurch gekennzeichnet, dass** in einem zusätzlichen Schritt Mineralisierungsmittel der Rohmischung im Zubereitungsschritt zugefügt wird, um die Steuerung der Verringerung der Sintertemperatur zu verstärken.

5. Das Verfahren nach Anspruch 4, **dadurch gekennzeichnet, dass** besagtes Mineralisierungsmittel CaF2 ist, das in einem von 0,2 bis 0,5% Gewichtsprozenten schwankenden Verhältnis der Gesamtzusammensetzung der Rohmischung beigefügt wird.

6. Das Verfahren nach Anspruch 1, **dadurch gekennzeichnet, dass** es ferner einen Schritt der Steuerung der SO₃-Konzentration in der kalzinierten Mischung enthält, die in den Klinkerofen eingeführt wird,

7. Das Verfahren nach Anspruch 6, **dadurch gekennzeichnet, dass** die SO₃-Konzentration der kalzinierten Mischung, die in den Klinkerofen eingeführt wird, einen Maximalwert von 5 Gewichtsprozenten aufweist.

8. Das Verfahren nach einem der voranstehenden Patentansprüche, **dadurch gekennzeichnet, dass** die SO₃-Konzentration in dem gefertigten Klinker einen Wert von mehr als 1,8 Gewichtsprozenten aufweist.

9. Das Verfahren nach einem der voranstehenden Patentansprüche, **dadurch gekennzeichnet, dass** die Temperatur in der Rauchkammer (126) unter 1150 °C liegt.

10. Das Verfahren nach einem der voranstehenden Patentansprüche, **dadurch gekennzeichnet, dass** die Sauerstoffzufuhr am Ofeneintritt (117) über 4,5 % liegt, um eine stark oxidierende Atmosphäre beizubehalten.

## Revendications

1. Une méthode pour produire des scories de ciment comprenant les étapes de :
- alimentation du mélange brut ;
- préchauffage du mélange brut ;
- calcination du mélange brut préchauffé ;
- scorification du mélange brut calciné afin de produire des scories de ciment et contrôle du temps de séjour du mélange calciné, de la température de scorification et des conditions d'oxydation à l'entrée du four (117) durant l'étape de scorification ; et
- refroidissement des scories de ciment,
dans laquelle la méthode inclut en outre les étapes de :
- préparation du mélange brut avant l'étape d'alimentation, basée sur le facteur de saturation en chaux (LSF), le module de silice (SM), le module d'alumine (AM) et l'ajustement de finesse du mélange brut, le LSF ayant une valeur jusqu'à 1, le SM des valeurs comprises entre 2 et 3,5, l'AM entre 0 et 3, et l'ajustement de finesse dans un maillage N°.200.

2. La méthode selon la revendication 1, dans laquelle la température de scorification est de 1350°C.

3. La méthode selon la revendication 1, dans laquelle ledit combustible utilisé pour préchauffer, décarbonater et fritter le mélange brut est de la coke de pétrole avec une teneur en souffre de plus de 4,5% en poids.

4. La méthode selon la revendication 1, dans laquelle est comprise une étape additionnelle pour ajouter le minéralisateur à l'étape de préparation du mélange brut afin de renforcer le contrôle de la réduction de température de scorification.

5. La méthode selon la revendication 4, dans laquelle ledit minéralisateur est CaF₂, qui est ajouté dans un ratio qui varie de 0,2 à 0,5% en poids de composition totale du mélange brut.

6. La méthode selon la revendication 1, dans laquelle elle inclut en outre une étape de contrôle de la concentration en SO₃ dans le mélange calciné qui alimente le four à scorification.

7. La méthode selon la revendication 6, dans laquelle la concentration en SO₃ dans le mélange calciné qui alimente le four à scorification a une valeur maximale de 5% en poids.

8. La méthode selon l'une des revendications précédentes, dans laquelle la concentration de SO₃ dans les scories produites, a une valeur de plus de 1,8% en poids.

9. La méthode selon l'une des revendications précédentes, dans laquelle la température dans la sorbonne (126) est inférieure à 1150°C.

10. La méthode selon l'une des revendications précédentes, dans laquelle la réserve en oxygène à l'entrée du four (117) est de plus de 4,5% pour maintenir une atmosphère hautement oxydante.
